# EUROPEAN PATENT APPLICATION

(11) **EP 2 990 640 A1**
(43) Date of publication of application: **02.03.2016**
(21) Application number: 13883342.1
(22) Date of filing: 28.11.2013
(51) Int. Cl.: F02P 7/067, F02D 35/00

(54) **ENGINE SYSTEM AND VEHICLE EQUIPPED WITH SAME**

(30) Priority: 26.04.2013 JP 2013094113
(71) Applicant: Yamaha Hatsudoki Kabushiki Kaisha, Iwata-shi, Shizuoka 438-8501 (JP)
(72) Inventor: NISHIMURA, Tetsuhiko, Iwata-shi Shizuoka 438-8501 (JP); MAEBASHI, Kosei, Iwata-shi Shizuoka 438-8501 (JP); SAWADA, Yuuichirou, Iwata-shi Shizuoka 438-8501 (JP)
(74) Representative: Stöckeler, Ferdinand
(86) International application number: PCT/JP2013/082078
(87) International publication number: WO 2014/174717

(57) **Abstract**

Provided is an engine system including an engine that has a crankshaft, a rotary member that rotates around a rotation axis together with the crankshaft, a plurality of first detection bodies provided on the rotary member, a second detection body also provided on the rotary member, first and second detecting means that detect first and second detection bodies, respectively, and an ignition control means. The plurality of first detection bodies are disposed at even intervals along a rotation direction of the rotary member. The second detection body is disposed at a position different from those of the first detection bodies in a direction along the rotation axis. The first detecting means has a first detection region at a fixed position on a path that the first detection bodies pass through according to rotation of the rotary member. The second detecting means has a second detection region at a fixed position on a path that the second detection body passes through according to rotation of the rotary member, and detects the second detection body in a compression stroke of the engine. The ignition control means starts energization control for energizing the ignition coil in response to detection of the second detection body by the second detecting means.

## Description

### [Technical Field]

The present invention relates to an engine system including an engine (internal combustion) that burns fuel by spark discharge of an ignition plug inside a combustion chamber, and a vehicle including the engine system.

### [Background Art]

A fuel injection type engine includes a crank angle detection device for detecting a rotation angle of a crankshaft. The crank angle detection device includes a rotor that rotates together with the crankshaft and a pickup that generates a detection signal according to rotation of the rotor. On the outer periphery of the rotor, detection teeth are provided at even intervals. A detection signal to be output by the pickup changes according to passage of the detection tooth. By shaping the waveform of the detection signal, crank pulses are generated. In some of the conventional crank angle detection devices, a tooth-missing position at which the detection tooth is not provided is set at a portion of the outer circumference of the rotor. At this tooth-missing position, no crank pulse is generated, so that the crank pulse interval becomes longer before and after the tooth-missing position. Accordingly, a reference rotation position of the crankshaft is obtained. By counting the crank pulses (counting the detection teeth) by using this reference rotation position as a reference, the crank angle can be obtained. Based on the crank angle thus obtained, fuel injection control and ignition control are performed.

Patent Document 1 discloses a crank angle detection device that detects a plurality of protrusions disposed on the outer peripheral surface of a rotor so that the rear end positions thereof are at even intervals. The crank angle detection device has a pickup to detect the protrusions and generates crank pulses. One of the plurality of protrusions is longer in length from the rear end to the front end than other protrusions, and is set as a protrusion indicating a reference angle of the crank angle (hereinafter, referred to as a "reference protrusion"). This reference protrusion is disposed just before the crank angle (top dead point position) corresponding to the top dead point of the piston. The pickup generates negative pulses at front ends of the protrusions, and generates positive pulses at rear ends of the protrusions. The waveforms of the negative pulses and the positive pulses are shaped, and they become front end position pulses and rear end position pulses. At generation timings of the front end position pulses, a CPU is interrupted, and accordingly, the front end position pulse generation intervals are measured. The CPU is also interrupted at generation timings of the rear end position pulses, and accordingly, the rear end position pulse generation intervals are measured. The interval between the front end position of the reference protrusion and the front end position of the protrusion just before the reference protrusion is short, so that the rear end position of the reference protrusion is detected based on the ratio of the front end position pulse generation interval to the rear end position pulse generation interval. In synchronization with this, energization of the ignition coil is started. Then, when the rear end position of the next protrusion after the reference protrusion is detected, energization of the ignition coil is stopped, and spark discharge of the ignition plug is caused, and first explosion ignition is performed. Thus, an accurate crank angle can be detected before the crankshaft has rotated 360 degrees, and a proper first explosion timing can be provided.

### [Citation List]

### [Patent Literature]

### [PTL1]

Japanese Unexamined Patent Application Publication No. 2005-291143

### [Summary of Invention]

### [Problems to be solved by Invention]

In a carburetor type engine, a rotor for crank angle detection is provided with only one projection, and based on detection of this projection, energization of the ignition coil and spark discharge of the ignition plug are controlled. Therefore, when cranking is started, ignition control can be started immediately, so that the starting performance is excellent.

On the other hand, in a fuel injection type engine, as described above, a plurality of protrusions are disposed around the rotor and are provided with functions, respectively, so that in a period before it is identified which functions the respective protrusions have, ignition control cannot be started. In detail, the engine has a configuration in which a signal serving as a reference is output based on, for example, a protrusion having a shape different from the shapes of other protrusions or a tooth-missing position. Based on the signal serving as a reference, the protrusions are identified. Therefore, until the signal serving as a reference is output, ignition control cannot be started. However, depending on the stop position of the engine, after the compression top dead point is gotten over from the start of cranking by the starter motor, the signal serving as a reference may be output for the first time. Therefore, it takes a long time before starting ignition control, so that the starting performance of the engine is poor. The starter motor may be designed to be as small as possible so as to obtain an output that enables the crankshaft to reliably rotate and get over the first compression top dead point.

With the conventional art disclosed in Patent Document 1, a reference protrusion that has a length in the circumferential direction different from those of other protrusions is disposed just before the top dead point position. Therefore, the device relating to this conventional art can provide a proper initial explosion timing.

However, particularly when getting over the first compression top dead point just after the start of cranking, the rotation speed of the rotor approaches zero with the decreasing distance from the compression top dead point. Accordingly, the time interval of signals to be output by the pick-up increases with the decreasing distance from the compression top dead point. Therefore, it becomes difficult to judge whether the signal is a signal based on detection of the reference protrusion. As a result, the engine cannot be reliably started in the first compression stroke after the start of cranking.

The above-described configuration for generating a signal serving as a reference, such as a tooth-missing position, is normally disposed so that the rotation speed of the crankshaft is detected at a stable crank angle by the pick-up. With this configuration, the above-described problem in the conventional art described in Patent Document 1 does not occur. However, in many cases, the stop position of the engine is before the compression stroke, so that with the normal disposition of the tooth-missing position, etc., the signal serving as a reference may not be generated until the first compression top dead point just after the start of cranking is gotten over.

Thus, in the fuel injection type engines conventionally proposed, it is difficult to reliably detect the reference position of the crankshaft, and to ignite and start the engine in the first compression stroke after the start of cranking.

Therefore, an object of the present invention is to provide an engine system capable of improving the starting performance by igniting the engine in the first compression stroke after the start of cranking.

### [Solution to the Problem]

A preferred embodiment of the present invention provides an engine system including an engine that has a crankshaft, a rotary member that rotates around a rotation axis together with the crankshaft, a plurality of first detection bodies provided on the rotary member, a second detection body also provided on the rotary member, first and second detecting means that detect the first and second detection bodies, respectively, and an ignition control means. The engine includes an ignition plug that spark-discharges inside a combustion chamber, an ignition coil that stores energy to be supplied to the ignition plug, and the crankshaft. The plurality of first detection bodies are disposed at even intervals along the rotation direction of the rotary member. The second detection body is disposed at a position different from those of the first detection bodies in a direction along the rotation axis. The first detecting means has a first detection region at a fixed position on a path that the first detection bodies pass through according to rotation of the rotary member, and outputs a detection signal that varies according to passage of the first detection body through the first detection region. The second detecting means has a second detection region at a fixed position on a path that the second detection body passes through according to rotation of the rotary member, and outputs a detection signal that varies according to passage of the second detection body through the second detection region, and detects the second detection body in a compression stroke of the engine. The ignition control means starts energization control for energizing the ignition coil in response to detection of the second detection body by the second detecting means. "Energization control" means control for energizing the ignition coil. Energization control includes detection or judgment of an energization start timing of the ignition coil in addition to energization of the ignition coil. In a preferred embodiment, start of energization control is start of control for judging an energization start timing. In another preferred embodiment, start of energization control is start of energization of the ignition coil.

With the above-described configuration, on the rotary member, a plurality of first detection bodies and a second detection body are provided. The plurality of first detection bodies are disposed at even intervals along the rotation direction of the rotary member. The second detection body is disposed at a position different from those of the first detection bodies with respect to a direction along the rotation axis of the rotary member. That is, the second detection body is provided on the rotary member so as to be deviated from the first detection bodies along the rotation axis of the rotary member. When the rotary member rotates, the plurality of first detection bodies pass through the first detection region of the first detecting means one after another. Accordingly, crank pulses can be generated by using an output signal of the first detecting means. On the other hand, when the rotary member rotates, the second detection body passes through the second detection region of the second detecting means in a compression stroke of the engine. In response to an output signal of this second detecting means, energization control for energizing the ignition coil is started. Therefore, in the first compression stroke after cranking of the engine is started, energization control of the ignition coil can be started. Accordingly, the engine starting performance in the first compression stroke can be improved. In addition, the plurality of first detection bodies can be identified by using the output signal of the second detecting means, so that subsequent control of the engine can be quickly started. In addition, the second detection body is disposed so as to be deviated from the first detection bodies along the rotation axis direction, and the second detecting means that detects the second detection body is provided separately from the first detecting means that detects the first detection bodies. Therefore, regardless of whether the rotation of the rotary member is at a high speed or at a low speed, erroneous detection hardly occurs, and accordingly, starting reliability and stable engine control in the first compression stroke can be secured. Thus, an engine system that can improve the starting performance by reliably igniting the engine in the first compression stroke can be provided.

The energization timing to energize the ignition coil is determined according to the rotation position of the crankshaft. Therefore, it is preferable that when or just before the rotation position of the crankshaft is at a position at which energization of the ignition coil should be started, the second detection body is detected by the second detecting means. That is, it is preferable that the relative positions of the second detection region of the second detecting means and the second detection body are determined so as to satisfy this condition. Therefore, for example, it is possible that the disposition of the second detecting means is determined, and that, according to this disposition, disposition of the second detection body on the rotary member is determined. Therefore, the degree of freedom of disposition of the second detecting means is high, and the design condition for disposing the second detecting means is not strict. Accordingly, for example, a space having room around the rotary member can be selected for disposition of the second detecting means.

In a preferred embodiment of the present invention, the plurality of first detection bodies include an ignition detection body that provides an ignition timing of the ignition plug, and the ignition control means stops energization of the ignition coil in response to detection of the ignition detection body by the first detecting means and makes the ignition plug spark-discharges. With this configuration, when the second detecting means detects the second detection body, energization control of the ignition coil is started, and thereafter, when the first detecting means detects the ignition detection body, energization of the ignition coil is stopped and the ignition plug spark-discharges. Accordingly, fuel inside the combustion chamber of the engine ignites and explodes.

Dispositions of the second detection body and the second detection region are preferably set so that the second detection body is detected by the second detecting means just before the first detecting means detects the ignition detection body. For example, the plurality of first detection bodies may include an energization start detection body and an ignition detection body. In this case, dispositions of the second detection body and the second detection region are preferably set so that the second detection body is detected by the second detecting means simultaneously with or just before a timing at which the first detecting means detects the energization start detection body. In the case of the dispositions set so that the second detection body is detected by the second detecting means just before the timing at which the first detecting means detects the energization start detection body, the dispositions are preferably set so that the energization start detection body is detected by the first detecting means earlier than any other first detection bodies after the second detecting means detects the second detection body. The energization start detection body may be disposed on the rotary member so as to pass through the first detection region just before the ignition detection body. In other words, the first detection body that passes through the first detection region first after the energization start detection body passes through the first detection region may be the ignition detection body.

For example, it is also possible that the dispositions are set so that the second detection body is detected by the second detecting means simultaneously with detection of the energization start detection body by the first detecting means, and energization of the ignition coil is started in response to (in synchronization with) detection of the second detection body by the second detecting means.

It is also possible that the dispositions are set so that the second detection body is detected by the second detecting means before the energization start detection body is detected by the first detecting means, and identification of the first detection bodies is started after waiting for detection of the second detection body, and in response to (in synchronization with) detection of the energization start detection body, energization of the ignition coil is started. In this case, it is preferable that the dispositions are set so that the second detection body is detected by the second detecting means at a timing between the detection timing of the energization start detection body and the detection timing of the first detection body just before the detection timing of the energization start detection body. That is, the dispositions are preferably set so that a certain first detection body is detected by the first detecting means, and next, before another first detection body is detected by the first detecting means, the second detection body is detected by the second detecting means, and then, the energization start detection body is detected earlier than any other first detection bodies.

"Energization control" in the case described above includes identification of the first detection bodies which is started in response to (in synchronization with) detection of the second detection body, and energization of the ignition coil which is started in response to (in synchronization with) detection of the energization start detection body. Such "energization control" is started in response to detection of the second detection body.

In a preferred embodiment of the present invention, the second detection body is disposed at the same position as any of the plurality of first detection bodies with respect to the circumferential direction of the rotary member. With this configuration, when the first detecting means detects the first detection body, even if the first detecting means simultaneously responds to the second detection body (that is, detects the second detection body as well), this hardly greatly influences the output signal of the first detecting means. In addition, it is possible that the first detection bodies and the second detection body are disposed close to each other, so that the size in the rotation axis direction of the rotary member can be reduced. Accordingly, the engine system can be downsized.

In a preferred embodiment of the present invention, the second detection body is integrated with any of the plurality of first detection bodies. With this configuration, erroneous detections can be reduced and the engine can be stably controlled, and the rotary member can further be downsized. In addition, in the manufacturing process, when the first detection bodies are disposed, the second detection body can also be disposed simultaneously, so that the manufacturing steps can be reduced.

In a preferred embodiment of the present invention, the first detecting means and the second detecting means are disposed at different positions with respect to a direction along the rotation axis. With this configuration, the first detection region and the second detection region can be easily deviated from each other in the rotation axis direction, so that erroneous detections can be reduced, and the first and second detecting means can also be easily disposed.

The first and second detecting means may be disposed at the same position or different positions with respect to the rotation direction of the rotary member. From the viewpoint of the easiness of securing of the disposition spaces, the first and second detecting means are preferably disposed at different positions with respect to the rotation direction of the rotary member. As described above, as long as the relative positions of the second detection region and the second detection body are properly set, the second detection region can be freely disposed around the rotary member. Therefore, a space in which the second detecting means is easily disposed may be selected, and the second detecting means may be disposed there.

In a preferred embodiment of the present invention, the first detection region and the second detection region are disposed at different positions with respect to the circumferential direction of the rotary member. With this configuration, the first and second detecting means can be easily disposed at different positions in the circumferential direction, so that, for example, a design for downsizing the engine system can be easily made.

In a preferred embodiment of the present invention, the rotary member includes a tubular portion that has a width in a direction along the rotation axis, and the first detection bodies are disposed so as to be deviated in one direction along the rotation axis with respect to the center position in the width direction of the tubular portion. With this configuration, the first detection bodies and the second detection body can be disposed by effectively utilizing the width of the tubular portion, so that the width of the tubular portion can be made smaller. Accordingly, the rotary member can be downsized, and as a result, the engine system can be downsized.

In a preferred embodiment of the present invention, the second detection body is disposed so as to be deviated in the other direction along the rotation axis with respect to the center position in the width direction of the tubular portion. With this configuration, the first and second detection bodies are distributed to both sides of the center in the width direction of the tubular portion. Accordingly, the width of the tubular portion can be made smaller, so that the rotary member can be downsized. "Distributed to both sides" means setting of the positions of the centers of gravity at positions opposite to each other with respect to the center in the width direction of the tubular portion. Therefore, at least either one of the first detection bodies and the second detection body may be disposed across the center in the width direction of the tubular portion.

In a preferred embodiment of the present invention, the second detection region is disposed so that the second detection body passes through the second detection region when the rotation position of the crankshaft is just before the top dead point position. With this configuration, when starting the engine, energization of the ignition coil can be started before the rotation position of the crankshaft reaches the top dead point position, and the engine can be quickly started. In addition, a reference relating to the rotation position of the crankshaft can be obtained before the rotation position of the crankshaft reaches the top dead point position, and accordingly, it becomes possible to identify the first detection bodies. As a result, the engine can be quickly started.

When the rotation position of the crankshaft is just before the compression top dead point position, a load (cranking load) necessary for rotating the crankshaft becomes maximum. Therefore, when the engine is stopped, the crankshaft is very likely to stop at a rotation position before the compression top dead point. Therefore, the first top dead point position after the engine starts is the compression top dead point position in most cases. Therefore, according to detection of the second detection body by the second detecting means just before the first top dead point position after the start of the engine, ignition control can be quickly started, and the engine can be quickly started. That is, the engine is preferably configured so that the first top dead point position after the start of cranking is a compression top dead point position.

"Rotation position just before the top dead point position" means a rotation position in a predetermined range before the top dead point, and specifically, may be a position in a rotation position range of 180 degrees or less just before the top dead point position. Specifically, it corresponds to a rotation position of the crankshaft in a compression stroke or an exhaust stroke in a four-stroke engine in which one cycle consists of four strokes of intake, compression, explosion, and exhaust. More preferably, the "rotation position just before the top dead point position" is a rotation position at 90 degrees or less just before the top dead point position, that is, a rotation position of the crankshaft in the latter half of the compression stroke or exhaust stroke.

In a preferred embodiment of the present invention, the engine system further includes a reference position detection portion that is provided on the rotary member so as to pass through the first detection region, and that can be distinguished from the first detection bodies and the second detection body based on an output signal of the first detecting means, and a detection body identifying means that identifies the first detection bodies by using the reference position detection portion or the second detection body as a reference based on output signals of the first detecting means and the second detecting means, the plurality of first detection bodies include an energization start detection body that provides an energization start timing for the ignition coil, and the detection body identifying means identifies the energization start detection body by using either one detected earlier of the second detection body and the reference position detection portion as a reference before starting of the engine is completed after starting of the engine is initiated, and on the other hand, after starting of the engine is completed, the detection body identifying means identifies the energization start detection body by using the reference position detection portion as a reference without using an output of the second detecting means, and the ignition control means starts energization of the ignition coil in response to (in synchronization with) identification of the energization start detection body by the detection body identifying means.

With this configuration, the reference position detection portion is provided separately from the second detection body, so that when either the second detection body or the reference position detection portion is detected, the first detection bodies can be identified. The energization start detection body and the ignition detection body are identified by using either one detected earlier of the second detection body and the reference position detection portion as a reference before starting of the engine is completed after starting of the engine is initiated. Accordingly, when the second detection body is detected earlier after starting the engine, by using the second detection body as a reference, and when the reference position detection portion is detected earlier, by using this reference position detection portion as a reference, the energization start detection body and the ignition detection body are identified. When the energization start detection body is identified, energization of the ignition coil is started. Accordingly, ignition control when starting the engine can be reliably quickly started. On the other hand, after starting of the engine is completed, without using an output of the second detection body, the energization start detection body is identified by using the reference position detection portion as a reference, and in response to (in synchronization with) this, energization of the ignition coil is started.

According to the conventional technology described in Patent Document 1, even after starting of the engine is completed, a reference position of the crankshaft is provided by the reference protrusion, and based on this reference position, other protrusions are identified. Then, based on the identification results, various engine controls including ignition control and fuel injection control are performed.

However, the reference protrusion is provided just before the top dead point position, so that rotation of the crankshaft is not always stable when the reference projection is detected. In particular, near the compression top dead point, the cranking load is maximum, so that the rotation of the crankshaft is most unstable. Therefore, detection of the reference protrusion arranged at the position just before the top dead point position is not always stable, and accordingly, accurate engine control may be prevented, and eventually, the driving efficiency of the engine may be deteriorated.

Therefore, even when the second detection body is used by giving priority on quick start of the ignition control at the time of start of the engine, after starting of the engine is completed, not the second detection body but the reference position detection portion is preferably used as a reference for identification of the first detection bodies. Accordingly, the accuracy of identification of the first detection bodies can be improved, and therefore, accurate and efficient engine control can be realized.

In a preferred embodiment of the present invention, the positional relationship between the second detection body and the second detection region is determined so that the first detection body that is detected first after the second detection body is detected by the second detecting means is the energization start detection body. That is, between the timing at which the energization start detection body is detected and the timing at which the first detection body previous to the energization start detection body is detected, the second detection body is detected. Accordingly, after cranking is started, the second detection body is detected just before (immediately before) the energization start detection body is detected for the first time, so that the energization start detection body can be quickly identified and energization of the ignition coil can be started. Accordingly, the engine can be quickly started.

In a preferred embodiment of the present invention, the reference position detection portion is disposed on the rotary member so as to pass through the first detection region when the rotation position of the crankshaft is near a bottom dead point position (in a predetermined range including the bottom dead point position). The reference position detection portion can reliably be detected because the rotation of the crank shaft is stable near the bottom dead point position.

For the same reason, it is preferable that the reference position detection portion is disposed so as to pass through the first detection region and be detected by the first detecting means in an expansion stroke or intake stroke of the engine.

A preferred embodiment of the present invention provides a vehicle that includes an engine system having the above-described features and uses the above-described engine as a power source.

The above-described or other objects, features, and effects of the present invention will be clarified by the following description of the preferred embodiments with reference to the accompanying drawings.

### [Brief Description of Drawings]

[Fig. 1]

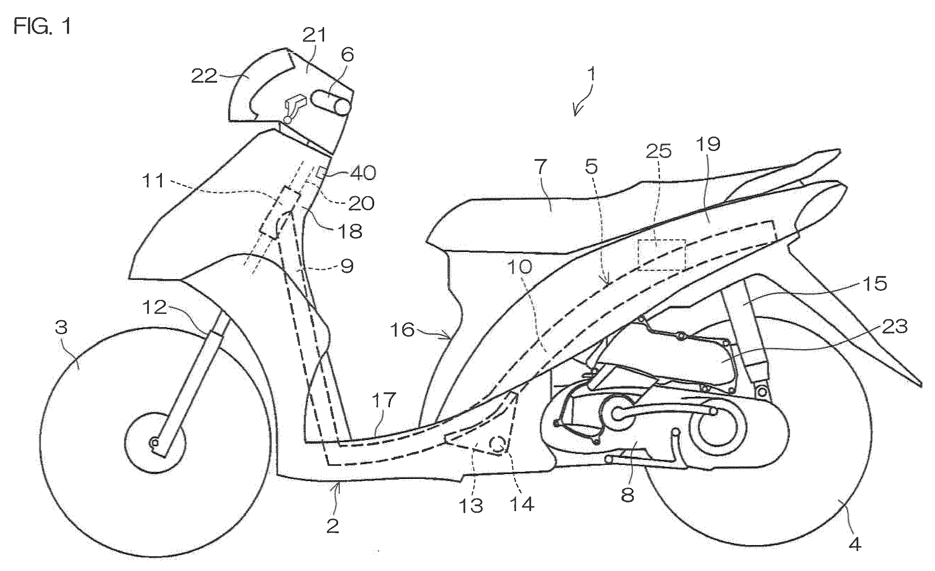

   Fig. 1 is an illustrative side view for describing a configuration of a motorcycle as an example of a saddle type vehicle to which an engine system according to a preferred embodiment of the present invention is applied.
[Fig. 2]

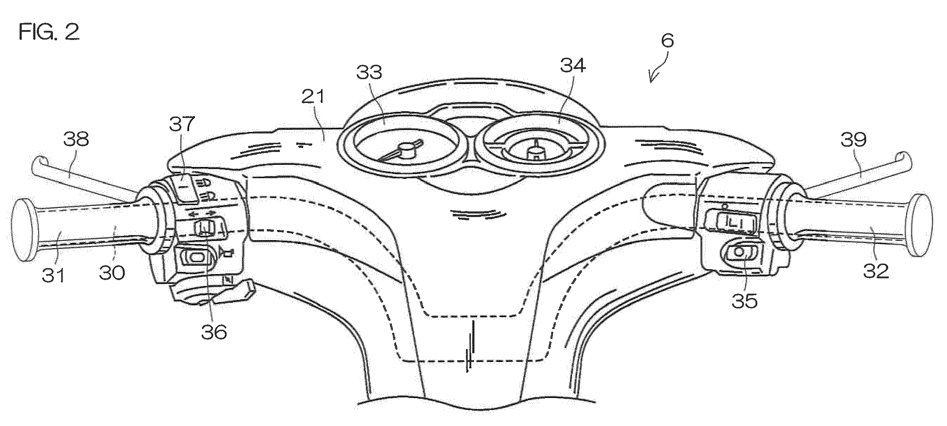

   Fig. 2 is a perspective view showing a configuration example of a handle of the motorcycle.
[Fig. 3]

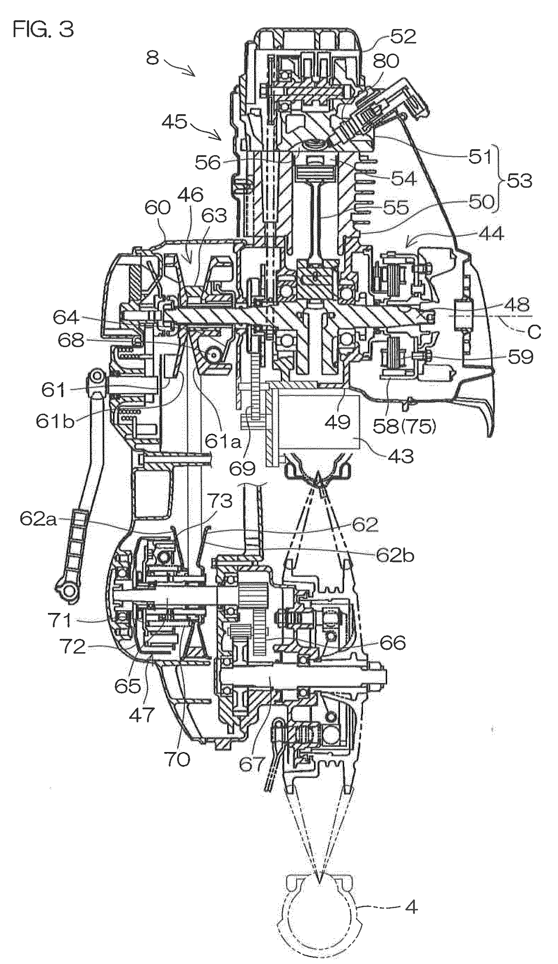

   Fig. 3 is a horizontal sectional view of a power unit of the motorcycle.
[Fig. 4]

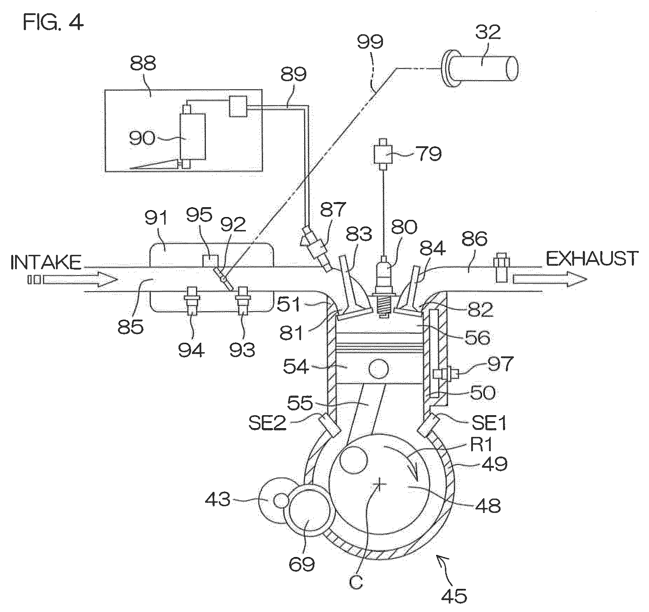

   Fig. 4 is a schematic view for describing a configuration relating to an engine installed in the power unit.
[Fig. 5]

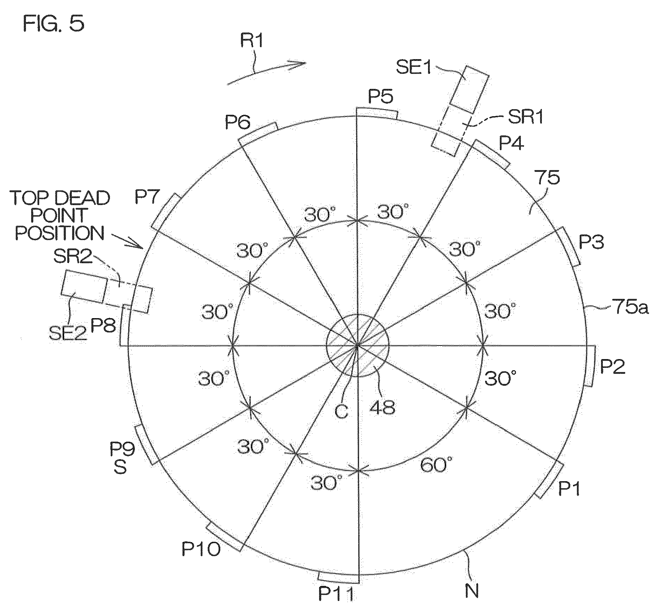

   Fig. 5 is a schematic view for describing a configuration for detecting a rotation position or a crank angle of the crankshaft of the engine.
[Fig. 6]

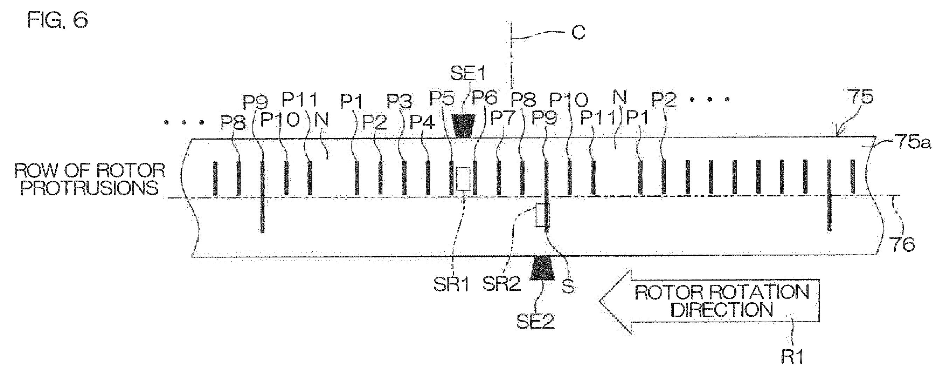

   Fig. 6 is a schematic view of a developed state of the outer peripheral surface of a rotor to detect a crank angle of the engine.
[Fig. 7]

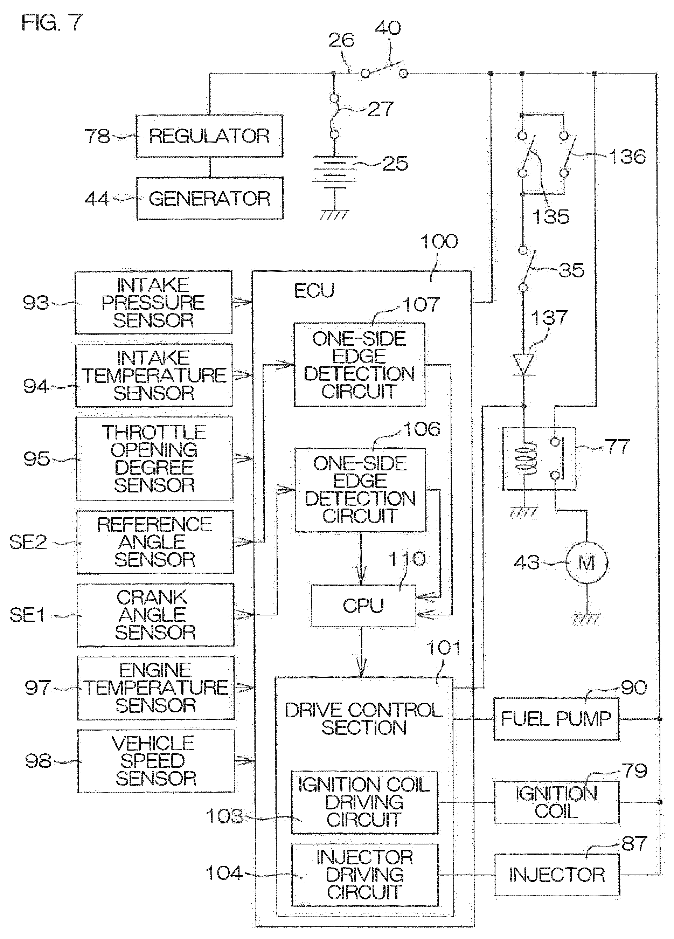

   Fig. 7 is a block diagram for describing an electrical configuration relating to control of the engine.
[Fig. 8]

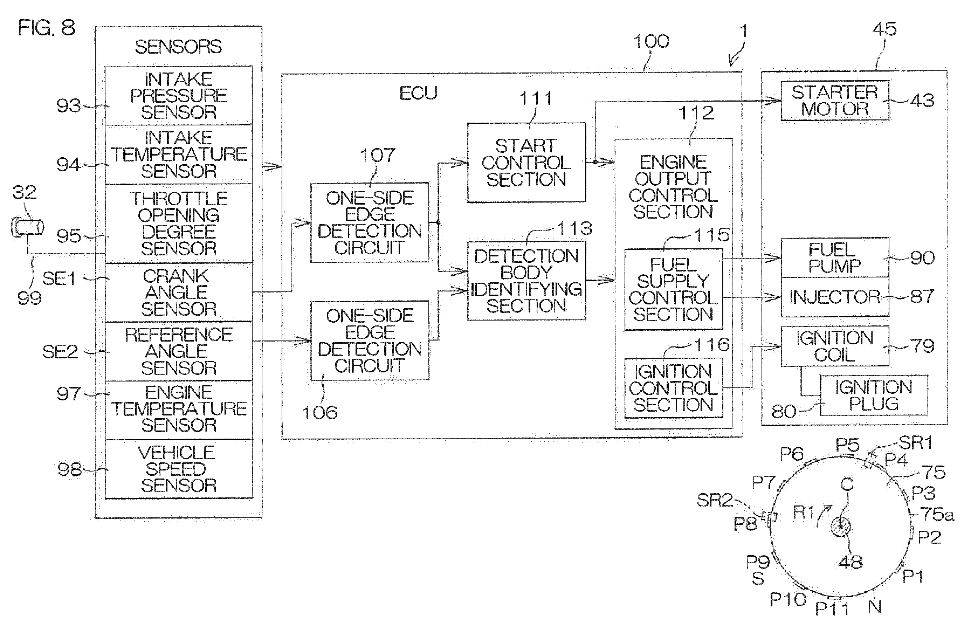

   Fig. 8 is a block diagram for describing a functional configuration of an ECU (Electronic Control Unit) that controls the engine.
[Fig. 9]

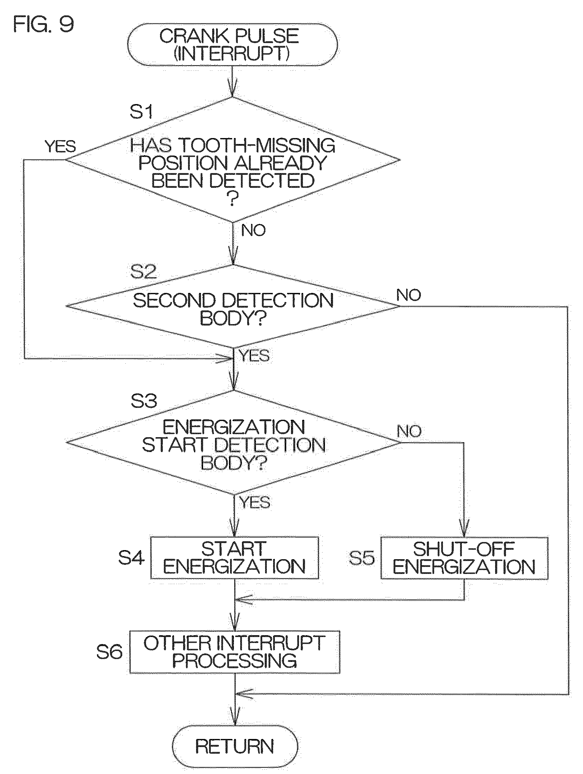

   Fig. 9 is a flowchart for describing the details of engine start control.
[Fig. 10]

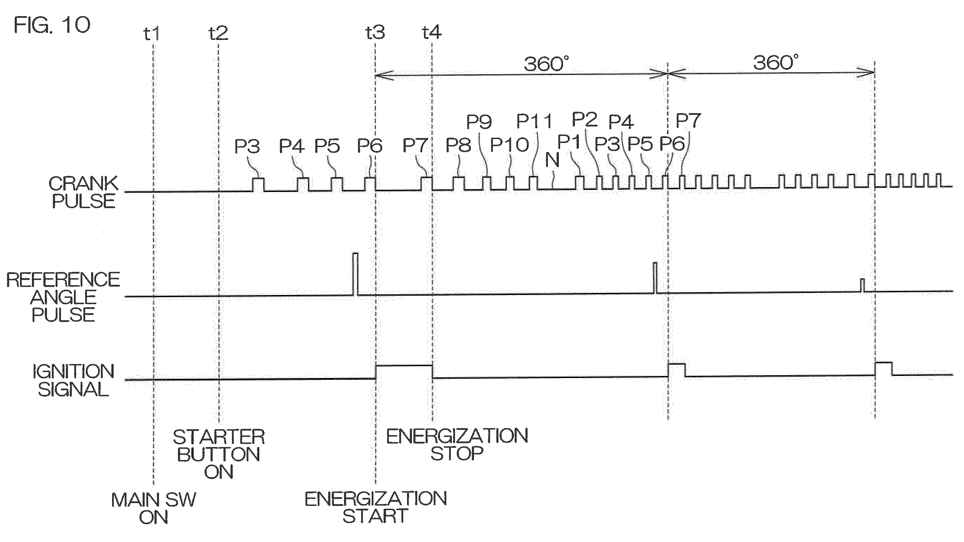

   Fig. 10 is a waveform chart showing waveform examples of crank pulses and an ignition signal when the engine starts.

### [Description of Embodiments]

Fig. 1 is an illustrative side view for describing a configuration of a saddle type vehicle to which an engine system according to a preferred embodiment of the present invention is applied. Fig. 1 shows a scooter type motorcycle 1 as an example of a saddle type vehicle. In the following description, for convenience, based on the point of view of a rider (driver) getting on the motorcycle 1, the front-rear, left-right, and up-down directions of the motorcycle 1 are defined.

A motorcycle 1 includes a vehicle main body 2, a front wheel 3, and a rear wheel 4. The vehicle main body 2 includes a vehicle body frame 5, a handle 6, a seat 7, and a power unit 8. The vehicle body frame 5 includes a down tube 9 disposed on the front side, and a pair of left and right side frames 10 disposed at the rear of the down tube 9. The down tube 9 extends forward to the diagonally upper side, and to an upper end portion thereof, a head pipe 11 is fixed. On this head pipe 11, a steering shaft 20 is supported turnably. To the lower end of the steering shaft 20, a pair of left and right front forks 12 are fixed. To an upper end portion of the steering shaft 20, the handle 6 is attached, and to the lower end portions of the front forks 12, a front wheel 3 is attached rotatably. The side frames 10 are curved in substantially S shapes, and extend rearward to the diagonally upper side from the lower end of the down tube 9. On the side frames 10, a seat 7 of saddle type is supported. To the vicinities of the intermediate portions of the side frames 10, a bracket 13 is fixed. On the bracket 13, the power unit 8 is supported so as to swing up and down via a pivot shaft 14. The power unit 8 is a unit swing type engine unit. Above the power unit 8, an air cleaner 23 for cleaning the air to be taken into the engine is disposed. Cushion units 15 are laid between the vicinities of the rear end portions of the side frames 10 and the rear end portion of the power unit 8. On the rear end portion of the power unit 8, a rear wheel 4 is supported rotatably.

The vehicle body frame 5 is covered by a vehicle body cover 16 made of resin. The vehicle body cover 16 includes a foot board 17 that is provided below the front side of the seat 7 and provides a foot placing portion, a front cover 18 that covers the head pipe 11, a side cover 19 that covers the region below the seat 7, and a handle cover 21 that covers the handle 6. A battery 25 is housed in a space covered by the side cover 19 below the seat 7, and is supported on the vehicle body frame 5. A headlight 22 is provided to be exposed forward from the handle cover 21, and supported on the handle 6. A main switch 40 for supplying electric power charged in the battery 25 to the motorcycle 1 is disposed on, for example, the rear surface (surface facing the seat 7) of the front cover 18. The main switch 40 may be a key switch that is operated by using a key held by a user.

Fig. 2 is a perspective view showing a configuration example of the handle 6, and shows a configuration viewed down from a driver seated on the seat 7. The handle 6 includes a handle bar 30 extending in the left-right direction, and grips 31 and 32 provided on the left end and right end of the handle bar 30. Ahead of the left grip 31, a rear wheel brake lever 38 for actuating a rear wheel brake is disposed, and ahead of the right grip 32, a front wheel brake lever 39 for actuating a front wheel brake is disposed. The right grip 32 is attached turnably in a predetermined angle range around the axis of the handle bar 30, and is an accelerator grip for an accelerating operation. The handle bar 30 is covered by the handle cover 21. The handle cover 21 is provided with a speed meter 33 and an engine rotation speed meter 34. Near the accelerator grip 32, a starter button 35 for starting the engine is disposed. Near the left grip 31, a turn signal switch 36, a headlight switch 37, etc., are disposed.

Fig. 3 is a horizontal sectional view of the power unit 8, and shows a section viewed from above, and the upper side corresponds to the front side of the motorcycle 1, and the lower side corresponds to the rear side of the motorcycle 1. The power unit 8 includes a starter motor 43, a power generator 44, an engine 45, a V-belt type continuously variable transmission 46, and a centrifugal clutch 47. The engine 45 is a four-stroke gasoline engine in which one cycle consists of four strokes of intake, compression, explosion, and exhaust, and is a drive source of the motorcycle 1.

The engine 45 includes a crankshaft 48 extending in the left-right direction, a crankcase 49 that houses the crankshaft 48, a cylinder block 50 extending forward from the crankcase 49, a cylinder head 51 fixed to the tip end portion of the cylinder block 50, and a head cover 52 fixed to the tip end portion of the cylinder head 51. The cylinder block 50 and the cylinder head 51 constitute a cylinder 53. Inside the cylinder block 50, a piston 54 is housed slidably. The piston 54 and the crankshaft 48 are joined by a connection rod 55. A combustion chamber 56 is defined by the cylinder block 50, the cylinder head 51, and the piston 54.

On the right of the crankcase 49, the power generator 44 is disposed. The power generator 44 includes a rotor 58 coupled to the right end portion of the crankshaft 48, and a stator coil 59 supported on the crankcase 49. When the crankshaft 48 rotates, the rotor 58 rotates around the stator coil 59, and an electromotive force is generated in the stator coil 59. By this electromotive force generated in the stator coil 59, the battery 25 (refer to Fig. 1) is charged.

The V-belt type continuously variable transmission 46 includes a transmission case 60, a drive pulley 61, a driven pulley 62, and a V-belt 63 wound around these pulleys. The drive pulley 61 is attached to the left end portion of the crankshaft 48. The driven pulley 62 is attached to a main shaft 65 rotatably around the main shaft 65. In detail, the driven pulley 62 includes a movable pulley piece 62a whose position in the axial direction of the main shaft 65 changes and a fixed pulley piece 62b whose position in the axial direction does not change. Both of the pulley pieces 62a and 62b are rotatable with respect to the main shaft 65. The main shaft 65 is held rotatably on the transmission case 60. Rotation of the main shaft 65 is transmitted to a rear wheel shaft 67 via a gear mechanism 66. The rear wheel shaft 67 is supported rotatably on the transmission case 60. To the rear wheel shaft 67, the rear wheel 4 is fixed.

Rotation of the driven pulley 62 is transmitted to the main shaft 65 via the centrifugal clutch 47. The centrifugal clutch 47 includes a primary side rotor 71 supported rotatably on the main shaft 65 and a secondary side rotor 72 as a clutch plate that is coupled to the main shaft 65 and rotates together with the main shaft 65. The secondary side rotor 72 has a tubular portion surrounding the primary side rotor 71. The driven pulley 62 is coupled to the primary side rotor 71, and the primary side rotor 71 rotates together with the driven pulley 62. However, the movable pulley piece 62a can be freely displaced along the axial direction of the main shaft 65, and a compression coil spring 70 is interposed between the movable pulley piece 62a and the primary side rotor 71. The primary side rotor 71 is provided with a shoe 73. The shoe 73 is configured to come into contact with the inner surface of the tubular portion of the secondary side rotor 72 when the rotation speed of the primary side rotor 71 increases to a predetermined speed. Therefore, when the rotation speed of the driven pulley 62 increases, the shoe 73 comes into contact with the secondary side rotor 72, and accordingly, the rotation of the driven pulley 62 is transmitted to the main shaft 65 via the centrifugal clutch 47, and a driving force is applied to the rear wheel 4.

The drive pulley 61 includes a movable pulley piece 61 a disposed in the crankcase 49, and a fixed pulley piece 61b disposed on the side away from the crankcase 49. The movable pulley piece 61 a is coupled to the crank shaft 48 so that the movable pulley piece 61a can be displaced in the axial direction of the crankshaft 48 with respect to the crankshaft 48, and rotates together with the crankshaft 48. The fixed pulley piece 61b is fixed to the crankshaft 48, and rotates together with the crankshaft 48 in a state where it is not displaced in the axial direction of the crankshaft 48. On the crankcase 49 side with respect to the movable pulley piece 61 a, a holder plate 64 is fixed to the crankshaft 48. A roller 68 is disposed between the holder plate 64 and the movable pulley piece 61a. The roller 68 is positioned near the rotation center when the rotation speed of the crankshaft 48 is low, and the movable pulley piece 61 a is positioned close to the crankcase 49 accordingly. On the other hand, as the rotation speed of the crankshaft 48 becomes higher, the roller 68 moves away from the rotation center due to a centrifugal force, and presses the movable pulley piece 61 a and brings it closer to the fixed pulley piece 61b.

When the rotation speed of the crankshaft 48, that is, the engine rotation speed is low, and the distance between the movable pulley piece 61a and the fixed pulley piece 61b is long, the V-belt 63 is positioned at a small-diameter position close to the crankshaft 48. Accordingly, on the driven pulley 62, the V-belt 63 is positioned at a large-diameter position away from the main shaft 65. This state is shown in Fig. 3. In this state, the rotation speed of the driven pulley 62 is low, so that the centrifugal clutch 47 is kept in a disconnected state. When the engine rotation speed increases, the roller 68 is displaced by a centrifugal force to move away from the crankshaft 48, and accordingly, the movable pulley piece 61a moves closer to the fixed pulley piece 61b, so that the V-belt 63 moves to a large-diameter position of the drive pulley 61. Accordingly, on the driven pulley 62, the V-belt 63 widens the distance between the movable pulley piece 62a and the fixed pulley piece 62b by pushing these against a force of the compression coil spring 70 and moves to the small-diameter position. As a result, the rotation speed of the driven pulley 62 increases, so that the centrifugal clutch 47 is switched into a connected state, and a driving force of the engine 45 is transmitted to the rear wheel 4. The centrifugal clutch 47 is a rotation speed responsive clutch that is switched into a connected state in response to an engine rotation speed. A minimum engine rotation speed when the centrifugal clutch 47 is switched into a connected state is referred to as "transmission rotation speed."

The starter motor 43 is fixed to the crankcase 49, and is actuated by electric power supplied from the battery 25. The rotative force of the starter motor 43 is transmitted to the crankshaft 48 by the gear mechanism 69 housed in the crankcase 49. Therefore, when starting the engine 45, the starter motor 43 is actuated, and accordingly, the crankshaft 48 is rotated. The starter motor 43 may be designed to be as small as possible while obtaining an output that enables the crank shaft 48 to reliably get over the first compression top dead point and rotate.

Fig. 4 is a schematic view for describing a configuration relating to the engine 45. On the cylinder head 51, an intake opening 81 and an exhaust opening 82 facing the combustion chamber 56 are defined. Further, on the cylinder head 51, an ignition plug 80 is disposed to face the combustion chamber 56. To the ignition plug 80, an ignition coil 79 is connected. The ignition coil 79 stores electric energy for making the ignition plug 80 spark-discharge. An intake valve 83 is disposed in the intake opening 81, and an exhaust valve 84 is disposed in the exhaust opening 82. The intake valve 83 opens and closes the intake opening 81, and the exhaust valve 84 opens and closes the exhaust opening 82. The intake valve 83 and the exhaust valve 84 are driven by a valve gear (not illustrated) that interlocks with the crankshaft 48. The intake opening 81 is connected to the intake port 85, and the exhaust opening 82 is connected to the exhaust port 86.

The engine 45 is a fuel injection type engine in the present preferred embodiment. Specifically, in the intake port 85, an injector 87 is disposed on the upstream side of the intake valve 83. The injector 87 is arranged to inject fuel toward the intake opening 81. The injector 87 is supplied with fuel from a fuel tank 88 via a fuel hose 89. Inside the fuel tank 88, a fuel pump 90 is disposed. The fuel pump 90 pressure-feeds fuel inside the fuel tank 88 to the fuel hose 89.

In the intake port 85, a throttle body 91 is disposed on the upstream side of the injector 87. The throttle body 91 holds a throttle valve 92, an intake pressure sensor 93, an intake temperature sensor 94, and a throttle opening degree sensor 95. The throttle valve 92 may be, for example, a butterfly valve including a plate-shaped valve element disposed turnably inside the intake port 85. The throttle valve 92 is mechanically coupled to the accelerator grip 32 via a wire 99 in the present preferred embodiment. Specifically, when the accelerator grip 32 is operated, according to the operation direction and the operation amount, the throttle valve 92 is displaced (in the present preferred embodiment, angular displacement) to change the throttle opening degree. The position of the throttle valve 92 is detected by the throttle opening degree sensor 95. The throttle valve 92 and the accelerator grip 32 are mechanically joined to each other, so that in the present preferred embodiment, the throttle opening degree sensor 95 functions as an accelerator operation detection section that detects an accelerator opening degree as an accelerator command value as well as the throttle opening degree. The accelerator opening degree is an operation amount of the accelerator grip 32. The intake pressure sensor 93 detects the pressure of the intake air. The intake temperature sensor 94 detects the temperature of the intake air.

A crank angle sensor SE1 for detecting a rotation angle of the crankshaft 48 is attached to the crankcase 49. To the crankcase 49, a reference angle sensor SE2 that provides a reference angle position of the crankshaft 48 at the time of start of the engine is further attached. An engine temperature sensor 97 for detecting the temperature of the engine 45 is attached to the cylinder block 50.

Fig. 5 and Fig. 6 are schematic views for describing configurations of the rotor 75, etc., for detecting the rotation position of the crankshaft 48, that is, a crank angle. Fig. 5 is a side view along the rotation axis C of the crankshaft 48, and Fig. 6 is a schematic view of a developed state in a band shape of the outer peripheral surface of a rotor 75. To the crankshaft 48, the rotor 75 being a rotary member to detect a crank angle is fixed. The rotor 75 rotates around the rotation axis C common to the crankshaft 48. When the engine 45 is driven, the crankshaft 48 and the rotor 75 rotate in the rotation direction R1. The rotor 75 may be commonly used as a rotor 58 for a generator 44 as shown in Fig. 3.

A crank angle sensor SE1 is disposed to face the rotor 75, and the rotor 75 and the crank angle sensor SE1 constitute a crank angle detection unit. The crank angle sensor SE1 consists of, for example, an electromagnetic pickup or an optical pickup, and is a first detection means that outputs an electric signal responsive to an object passing through the inside of a first detection region SR1.

Further, in this preferred embodiment, the reference angle sensor SE2 to detect a reference crank angle of ignition control at the time of start of the engine 45 is disposed to face the rotor 75. The reference angle sensor SE2 may have the same configuration as that of the crank angle sensor SE1, and consists of, for example, an electromagnetic pickup or an optical pickup, and is a second detecting means that outputs an electric signal in response to an object that passes through the inside of the second detection region SR2.

The first detection region SR1 and the second detection region SR2 are disposed at different positions. According to this, the crank angle sensor SE1 and the reference angle sensor SE2 are disposed at difference positions. In detail, the first and second detection regions SR1 and SR2 are disposed at different positions with respect to the rotation direction R1 of the rotor 75, and are also disposed at different positions with respect to a direction along the rotation axis C of the rotor 75. According to this, the crank angle sensor SE1 and the reference angle sensor SE2 are disposed at different positions with respect to the rotation direction R1 of the rotor 75, and are also disposed at different positions with respect to the direction along the rotation axis C of the rotor 75.

The rotor 75 has an outer peripheral surface 75a circular in a side view along a direction of the rotation axis C of the crankshaft 48. That is, the outer peripheral surface 75a defines a cylindrical surface along the rotation direction R1 of the crankshaft 48, that is, an endless band-shaped surface. A configuration obtained by developing this endless band-shaped surface on a plane is shown in Fig. 6. On the outer peripheral surface 75a, along its circumferential direction, that is, along the rotation direction R1 of the crankshaft 48, first detection bodies P1, P2, ..., P11 are disposed at even intervals. In the present preferred embodiment, the first detection bodies P1, P2, ..., P11 are flat projections (detection teeth) projecting by a predetermined height from the outer peripheral surface 75a toward the outer side of the rotation radius.

The crank angle sensor SE1 is disposed so that a path that the outer peripheral surface 75a of the rotor 75 and the first detection bodies P1, P2, ..., P11 pass through crosses the first detection region SR1 of the crank angle sensor SE1. The crank angle sensor SE1 outputs a detection signal that changes for each passage of the first detection bodies P1, P2, ..., P11 according to rotation of the rotor 75. Each of the first detection bodies P1, P2, ..., P11 has a front end positioned on the downstream side in the rotation direction R1 and a rear end positioned on the upstream side in the rotation direction R1. When the crankshaft 48 rotates in the rotation direction R1, the front end of each detection body enters the first detection region SR1, and then the rear end of this detection body enters the first detection region SR1. An output signal of the crank angle sensor SE1 changes according to passage of the front end and passage of the rear end of each detection body. In the present preferred embodiment, the rear ends of the first detection bodies P1, P2, ..., P11 are used as detection edges. Specifically, from an output signal of the crank angle sensor 96, signals corresponding to the rear ends of the first detection bodies P1, P2, ..., P11 are extracted as significant signals to generate crank pulses. Therefore, the plurality of first detection bodies P1, P2, ..., P11 are disposed on the outer peripheral surface 75a of the rotor 75 so that rear ends thereof are at even intervals. In detail, eleven first detection bodies P1, P2, ..., P11 are disposed by matching the rear ends thereof with 11 positions of 12 positions arranged by dividing the full angle range of 360 degrees around the crankshaft 48 by 30 degrees into twelve. However, in this preferred embodiment, eleven first detection bodies P1 to P11 have equal lengths in the circumferential direction of the rotor 75, and as a result, the front ends of these are at even intervals along the circumferential direction of the rotor 75. One position at which the first detection bodies P1, P2, ..., P11 are missing is a tooth-missing position N. The distance between the first detection bodies P1 and P11 before and after the tooth-missing position N is long, so that the crank pulse interval becomes long. Therefore, by detecting the tooth-missing position N, the reference position of the crankshaft 48 can be obtained, and by counting crank pulses generated according to passages of the first detection bodies P1, P2, ..., P11 from the reference position, the rotation position (crank angle) of the crankshaft 48 can be obtained. The tooth-missing position N is a reference position detection portion that provides a reference position of the crank angle.

The tooth-missing position N is, for example, disposed at a position such that the tooth-missing position N enters the first detection region SR1 near a bottom dead point position (a predetermined region including the bottom dead point position). The bottom dead position is defined by a crank angle at which the piston 54 is closest to the crankshaft 48. The tooth-missing position N is disposed so as to pass through the first detection region SR1 and be detected by the crank angle sensor SE1 in an expansion stroke or intake stroke of the engine 45. For example, the first detection body P6 that is sixth from the tooth-missing position N is an energization start detection body that provides a timing to start energization of the ignition coil 79, and the following seventh first detection body P7 is an ignition detection body that provides an ignition timing to cause spark discharge by the ignition plug 80. The ignition detection body P7 is, for example, disposed to face the crank angle sensor SE1 just before the top dead point position which is defined by a crank angle at which the piston 54 is farthest from the crankshaft 48. Specifically, the ignition detection body P7 is a first detection body closest to the top dead point position on the downstream side in the rotation direction R1 of the top dead point position among the plurality of first detection bodies P1 to P11.

As most clearly shown in Fig. 6, on the outer peripheral surface 75a of the rotor 75, at a position deviated in the rotation axis C direction with respect to the first detection bodies P1 to P11, the second detection body S is disposed. In this preferred embodiment, with respect to the rotation direction R1 of the rotor 75, the second detection body S is disposed at the same position as one (the first detection body P9 in Fig. 5 and Fig. 6) of the plurality of first detection bodies P1 to P11. In greater detail, the second detection body S is formed integrally with the one first detection body P9. That is, one (the protrusion corresponding to the first detection body P9) of the protrusions constituting the plurality of first detection bodies P1 to P11 extends long in the rotation axis C direction. A portion of this protrusion extending long constitutes the first detection body P9, and the remaining portion constitutes the second detection body S. When the outer peripheral surface 75a of the rotor 75 is equally divided into two regions by the centerline 76 in the width direction with respect to the rotation axis C direction, the row of the first detection bodies P1 to P11 is disposed in one of the regions, and the second detection body S is disposed in the other region. Thus, the first detection bodies P1 to P11 and the second detection body S are disposed at different positions with respect to the rotation axis C direction.

In this preferred embodiment, relative dispositions of the second detection body S and the second detection region SR2 are determined so that the second detection body S enters the second detection region SR2 just before the energization start detection body P6 enters the first detection region SR1. In this preferred embodiment, the second detection body S has a rear end that serves as a detection edge. The second detection body S is disposed so that the rear end of the second detection body S is detected by the reference angle sensor SE2 just before the rear end of the energization start detection body P6 is detected by the crank angle sensor SE1. In other words, before the rear end of the energization start detection body P6 is detected by the crank angle sensor SE1 after the rear end of the first detection body P5 previous to the energization start detection body P6 is detected by the crank angle sensor SE1, the reference angle sensor SE2 detects the rear end of the second detection body S. Accordingly, the reference angle sensor SE2 detects the second detection body S in a compression stroke of the engine 45. The long protrusion constituting the first detection body P9 and the second detection body S is configured similarly to other first detection bodies P1 to P8, P10, and P11 except that its length in the direction along the rotation axis C is longer than other first detection bodies P11 to P8, P10, and P11.

The disposition of the second detection body S is not limited to the disposition example shown in Fig. 5 and Fig. 6, but the second detection body S may be disposed at a position that is the same as the position of any of the first detection bodies P1 to P11 with respect to the rotation direction R1 and is deviated from the first detection bodies P1 to P11 with respect to the rotation axis C direction. To determine which of the first detection bodies P1 to P11 the second detection body S is disposed at the same position as at the design phase, the disposition of the reference angle sensor SE2 is used as a basis for the determination. In detail, around the rotor 75, a space in which the reference angle sensor SE2 can be disposed is found and the disposition of the reference angle sensor SE2 is determined, the second detection region SR2 is accordingly determined. Then, a first detection body that aligns with the second detection region SR2 with respect to the rotation axis C direction just before the energization start detection body P6 enters the first detection region SR1 and is detected by the crank angle sensor SE1 is identified. The second detection body S is disposed at the same position as the identified first detection body with respect to the rotation direction R1. Accordingly, just before detection of the energization start detection body P6 by the crank angle sensor SE1, the second detection body S is detected by the reference angle sensor SE2. That is, after the second detection body S is detected by the reference angle sensor SE2, the energization start detection body P6 is detected by the crank angle sensor SE earlier than any other first detection bodies. The design and assembling are easier in the case where the crank angle sensor SE1 and the reference angle sensor SE2 are disposed at different positions with respect to the rotation direction R1 of the rotor 75; however, these may be disposed at the same position with respect to the rotation direction R1.

The rotation load of the engine 45 becomes highest just before the compression top dead point. Therefore, the angle position of the crankshaft 48 when the engine 45 stops is before the compression top dead point in many cases. In detail, a load when the first detection body P7 (ignition detection body) just before the compression top dead point faces the crank angle sensor SE1 is maximum, and the engine 45 stops at an angle position about 90 degrees before the angle position corresponding to the maximum load in many cases. Specifically, as shown in Fig. 5, it is highly probable that when the engine 45 stops, the range from the fourth first detection body P4 to the fifth first detection body P5 from the tooth-missing position N is positioned in the first detection region SR1 of the crank angle sensor SE1.

When cranking is started from the state shown in Fig. 5, in the first compression stroke, the second detection body S quickly enters the second detection region SR2, and just after this, the energization start detection body P6 enters the first detection region SR1. Then, by starting identification of the first detection bodies P1 to P11 by using a timing at which the reference angle sensor SE2 detected the rear end edge of the second detection body S as a reference, the energization start detection body P6 can be identified immediately in the first compression stroke after start of cranking, and energization of the ignition coil 79 can be started. Accordingly, ignition control can be quickly started after start of cranking. The first detection body that is detected next to the energization start detection body P6 by the crank angle sensor SE1 can be identified as the ignition detection body P7. Therefore, energization of the ignition coil 79 is stopped in response to (in synchronization with) detection of the ignition detection body P7, and the ignition plug 80 can be made to ignite. In addition, the subsequent first detection bodies P1 to P11 can also be identified, so that engine control can be started immediately. Accordingly, without waiting for detection of the tooth-missing position N, the engine 45 can be quickly started. In detail, by performing ignition when the crankshaft 48 gets over the compression top dead point for the first time after start of cranking, the engine 45 can be started. Accordingly, the engine can be reliably started in the first compression stroke.

Fig. 7 is a block diagram for describing an electrical configuration relating to control of the engine 45. Outputs of the sensors 93 to 95, 97, SE1 and SE2 are input into the ECU (electronic control unit) 100. To the ECU 100, other sensors such as a vehicle speed sensor 98, etc., may be connected as appropriate. The vehicle speed sensor 98 is a sensor that detects the vehicle speed of the motorcycle 1, and may be a wheel speed sensor that detects rotation speeds of the wheels 3 and 4.

The ECU 100 includes an interface circuit for taking-in signals output from the sensors 93 to 95, 97, 98, SE1 and SE2. The interface circuit includes a one-side edge detection circuit 106, which serves as a crank pulse generating means, that shapes the waveform of the output signal of the crank angle sensor SE1 and generates crank pulses. The one-side edge detection circuit 106 detects signals corresponding to the rear ends of the first detection bodies P1 to P11 from the output signal of the crank angle sensor SE1 and generates crank pulses. The interface circuit includes a one-side edge detection circuit 107 that shapes the waveform of the output signal of the reference angle sensor SE2 and generates reference angle pulses. The one-side edge detection circuit 107 detects a signal corresponding to the rear end of the second detection body S from the output signal of the reference angle sensor SE2 and generates a reference angle pulse.

The ECU 100 includes a CPU 110. Based on output signals of the sensors 93 to 95, 97, SE1 and SE2, etc., the CPU 110 drives the fuel pump 90 and the injector 87 to control the fuel injection amount and the fuel injection timing. To the ECU 100, an ignition coil 79 is further connected. The ignition coil 79 stores electric power for causing spark discharge of the ignition plug 80 (refer to Fig. 4). The CPU 110 controls energization of the ignition coil 79 based on output signals of the sensors 93 to 95, 97, SE1 and SE2, etc., to control the ignition time (discharge timing of the ignition plug 80).

Further, the CPU 110 controls energization of the starter motor 43 to control the start of the engine 45.

The battery 25 is connected to a power supply line 26 via a fuse 27. The electric power stored in the battery 25 is supplied to the starter motor 43, the ECU 100, the ignition coil 79, the injector 87, the fuel pump 90, etc., via the power supply line 26. The battery 25 is supplied with electric power that is generated by the power generator 44 and rectified and regulated by the regulator 78, and accordingly, during driving of the engine 45, the battery 25 is charged.

The main switch 40 is interposed in the power supply line 26. To the power supply line 26, on the side opposite to the battery 25 with respect to the main switch 40, a parallel circuit of brake switches 135 and 136 is connected. The brake switch 135 becomes conductive when the rear wheel brake lever 38 is operated, and is shut off when the rear wheel brake lever 38 is not operated. Similarly, the brake switch 136 becomes conductive when the front wheel brake lever 39 is operated, and is shut off when the front wheel brake lever 39 is not operated. The starter button 35 is connected in series to the parallel circuit of these brake switches 135 and 136, a diode 137 is connected in series to the starter button 35, and further, a coil of a relay 77 is connected to the diode 137. To the power supply line 26, the starter motor 43 is connected via the relay 77. Therefore, when the starter button 35 is turned on in a state where the rear wheel brake lever 38 or the front wheel brake lever 39 is operated, the relay 77 becomes conductive and the electric power of the battery 25 is supplied to the starter motor 43.

In the power supply line 26, to the side opposite to the battery 25 with respect to the main switch 40, the ECU 100, the ignition coil 79, the injector 87, the fuel pump 90, etc., are connected. Specifically, when the main switch 40 becomes conductive, the electric power is supplied to the ECU 100, and the control operation of the ECU 100 is started.

The ECU 100 includes a drive control section 101 for driving actuators including the ignition coil 79, the injector 87, the fuel pump 90, the relay 77, etc. The drive control section 101 includes a plurality of driving circuits for energizing the actuators. The plurality of driving circuits include an ignition coil driving circuit 103 for energizing the ignition coil 79 and an injector driving circuit 104 for driving the injector 87. The CPU 110 controls energization of the actuators by controlling these driving circuits.

Between the diode 137 and the coil of the relay 77, the drive control section 101 of the ECU 100 is connected. Therefore, the ECU 100 can actuate the starter motor 43 by driving the relay 77 even when the starter button 35 is off.

Fig. 8 is a block diagram for describing a functional configuration of the ECU 100. The ECU 100 and the sensors 93 to 95, 97, SE1 and SE2, and 131 constitute an engine control device for controlling the engine 45. An engine system is configured by including the engine control device and the engine 45. As described above, the ECU 100 includes the CPU 110 installed inside, and by execution programs by the CPU 110, the functions of the functional processing sections described as follows are realized.

Specifically, the ECU 100 includes, as functional processing sections, a start control section 111, an engine output control section 112, and a detection body identifying section 113.

The engine output control section 112 controls the output of the engine 45. In detail, the engine output control section 112 includes a fuel supply control section 115 and an ignition control section 116. The fuel supply control section 115 controls the fuel injection amount and the fuel injection timing by controlling the fuel pump 90 and the injector 87. The ignition control section 116 controls a spark discharge time (ignition time) of the ignition plug 80 by controlling energization of the ignition coil 79. By controlling one or both of the fuel injection amount and the ignition time, the output of the engine 45 can be controlled. By cutting-off the fuel by setting the fuel injection amount to zero, the engine 45 can be stopped.

The start control section 111 judges that cranking is being performed when it receives crank pulses input in a stopped state of the engine 45, and performs control for engine start. Specifically, the start control section 111 commands the engine output control section 112 to perform fuel supply control and ignition control. Accordingly, in synchronization with the rotation of the crankshaft 48, fuel is injected by the injector 87 and energization of the ignition coil 79 is controlled, and the engine 45 is started.

The CPU 110 may further include an idling-stop control section as a functional processing section. That is, when idling-stop conditions are satisfied during an idling state of the engine 45, the CPU 110 may stop the engine 45 and switches it into the idling-stop state. The idling state is a state where the throttle opening degree is a full closing degree and the engine rotation speed is in an idling rotation speed range (for example, 2500 rpm or less). The idling-stop state is a state where the driving of the engine 45 is automatically stopped by control of the CPU 110. In detail, the CPU 110 stops fuel supply to the engine 45 by providing a fuel cut-off command to the engine output control section 112, and accordingly stops the engine 45.

The CPU 110 may further include, as a functional processing section, an engine restart control section that restarts the engine 45 when a predetermined operation of the accelerator grip 32 is detected during the idling-stop state of the engine 45. Restart means restarting the engine 45 being in an idling-stop state. In detail, the CPU 110 actuates the starter motor 43 by making the relay 77 (see Fig. 7) conductive by controlling the drive control section 101 and applies a fuel supply control and ignition control command to the engine output control section 112. Accordingly, the starter motor 43 is actuated and fuel is injected from the injector 87, and the ignition coil 79 spark-discharges, whereby the engine 45 restarts.

The detection body identifying section 113 is a detection body identifying means that identifies the detection bodies P1 to P11 detected by the crank angle sensor SE1. The detection body identifying section 113 uses crank pulses generated by the one-side edge detection circuit 106 (refer to Fig. 7) based on an output signal of the crank angle sensor SE1, and reference angle pulses generated by the one-side edge detection circuit 107 based on an output signal of the reference angle sensor SE2. In detail, the detection body identifying section 113 detects the tooth-missing position N or the second detection body S as a reference position based on crank pulses and reference angle pulses generated in response to passages of the rear ends of the detection bodies P1 to P11 and S. Then, by counting the crank pulses from the reference position, the detection body identifying section 113 identifies the plurality of first detection bodies P1 to P11 including the energization start detection body P6 and the ignition detection body P7. The results of this identification are given to the fuel supply control section 115 and the ignition control section 116.

When the energization start detection body P6 or a second detection body S is detected, the ignition control section 116 starts energization of the ignition coil 79. When the ignition detection body P7 is detected, the ignition control section 116 cuts-off energization of the ignition coil 79. Accordingly, energy stored in the ignition coil 79 is supplied to the ignition plug 80, and the ignition plug 80 causes spark discharge inside the combustion chamber 56.

Fig. 9 is a flowchart for describing details of engine start control. The CPU 110 executes an interrupting process for each input of a crank pulse or a reference angle pulse. First, the CPU 110 judges whether the tooth-missing position N has already been detected (Step S1). When the tooth-missing position N has already been detected (Step S1: YES), the CPU 110 judges whether the crank pulse corresponds to the energization start detection body P6 (Step S3). That is, the CPU 110 judges whether the detection body detected by the crank angle sensor SE1 is the energization start detection body P6. When it is the energization start detection body P6 (Step S3: YES), the CPU 110 starts energization of the ignition coil 79 (Step S4), and otherwise (Step S3: NO), the CPU 110 cuts-off energization of the ignition coil 79 (Step S5). That is, when energization of the ignition coil 79 has already been cut off, the CPU 110 keeps this cut-off state, and when the ignition coil 79 is being energized, the CPU 110 cuts-off the energization. By cutting-off the energization, the energy stored in the ignition coil 79 is supplied to the ignition plug 80, and spark discharge occurs on the ignition plug 80. Thereafter, other interrupting processes are further performed (Step S6).

Other interrupting processes (Step S6) include identifications of the first detection bodies P1 to P5, P7 to P11, and S corresponding to crank pulses that caused the interruptions, detection of the tooth-missing position N, fuel injection control, etc.

When the tooth-missing position N has not been detected yet (Step S1: NO), the second detection body S may be identified earlier than the tooth-missing position N (Step S2). In this case, in response to (in synchronization with) detection of the second detection body S (Step S2: YES), the energization start detection body P6 is identified by using the position of the second detection body S as a reference position (Step S3). Therefore, without waiting for detection of the tooth-missing position N, the energization of the ignition coil 79 can be controlled. Specifically, when the engine starts, by using either one detected earlier of the tooth-missing position N and the second detection body S as a reference, energization control of the ignition coil 79 and identification of the first detection bodies P1 to P11 are performed.

On the other hand, after the tooth-missing position N is detected (Step S1: YES), the interrupting process in response to a crank pulse corresponding to the second detection body S is omitted. Therefore, when the tooth-missing position N is detected earlier than the second detection body S when the engine starts, by using the tooth-missing position N exclusively as a reference, ignition control, fuel injection control, and other interrupting processes are performed. When the second detection body S is detected earlier than the tooth-missing position N when the engine starts, identification of the energization start detection body P6 and other first detection bodies just after the detection of the second detection body S is performed by using the position of the second detection body S as a reference. However, the tooth-missing position N is detected earlier than the next detection of the second detection body S, so that after this, the first detection bodies P1 to P11 are identified by using the tooth-missing position N as a reference.

The second detection body S is disposed so as to be detected just before the energization start detection body P6. That is, the first detection body that is detected first after the second detection body S is detected is the energization start detection body P6. Therefore, when starting the engine, the second detection body S can reliably provide a reference position before the energization start detection body P6 passes through the detection region SR1 of the crank angle sensor SE1 for the first time. That is, when the energization start detection body P6 is detected for the first time by the crank angle sensor SE1, energization of the ignition coil 79 can be reliably started. Accordingly, ignition control can be quickly started when the engine starts. On the other hand, after the engine starts, it is more proper that the reference position for identifying the first detection bodies P1 to P11 is provided not by the second detection body S but by the tooth-missing position N. The reason for this is that the second detection body S is disposed so as to be detected at a position near the top dead point position (in a predetermined range before the top dead point position) by the reference angle sensor SE2, and the tooth-missing position N is disposed so as to be detected at a position near the bottom dead point position (in a predetermined range including the bottom dead point position) by the crank angle sensor SE1. Specifically, the rotation of the crankshaft 48 is more stable when the tooth-missing position N is detected by the crank angle sensor SE1 than when the second detection body S is detected by the reference angle sensor SE2. Therefore, after starting of the engine 45 is completed, by using the tooth-missing position N as a reference position, the detection bodies P1 to P11 can be identified more accurately, so that the engine 45 can be controlled more accurately.

Further, the existing system in which the tooth-missing position is set near the bottom dead point position does not need to be significantly changed, so that the cost to be required for the system change can be minimized.

Fig. 10 is a waveform chart showing waveform examples of crank pulses, a reference angle pulse and an ignition signal when the engine starts. The main switch 40 is made conductive at the timing t1, and the starter button 35 is operated at the timing t2. Accordingly, rotation of the crankshaft 48 starts, and according to passages of the detection bodies P1 to P11, crank pulses are generated. In the example of Fig. 10, a crank pulse corresponding to the rear end of the first detection body P3 that is third from the tooth-missing position N is generated first. After crank pulses corresponding to the rear ends of the fourth first detection body P4 and the fifth first detection body P5 are generated, a reference angle pulse corresponding to the rear end of the second detection body S is generated, and subsequently, a crank pulse corresponding to the rear end of the energization start detection body P6 is generated.

After the second detection body S is identified, the CPU 110 starts energization of the ignition coil 79 at the timing t3 in synchronization with a crank pulse corresponding to the energization start detection body P6. Then, in synchronization with a crank pulse corresponding to the ignition detection body P7 that is detected next to the energization start detection body P6, the CPU 110 stops the energization of the ignition coil 79 at the timing t4.

Thereafter, crank pulses corresponding to the first detection bodies P8 to P11 are generated, and the CPU 110 performs necessary processes at the respective angle positions. After the first detection body P11, the tooth-missing position N faces the crank angle sensor SE1, so that until the crank pulse of the first detection body P1 to be detected next, a long time interval is generated. By monitoring the time intervals of the crank pulses, the CPU 110 detects the tooth-missing position N. Thereafter, by using the tooth-missing position N as a reference position, crank pulses corresponding to the first detection bodies P1 to P11 are counted, and at angle positions corresponding to the first detection bodies P1 to P11, necessary processes are performed.

Unless the second detection body S is provided, the first detection bodies P1 to P11 cannot be identified until the tooth-missing position N is detected. Therefore, the energization start detection body P6 is identified for the first time after the crankshaft 48 has rotated substantially 360 degrees, and then ignition control is started. Therefore, the time until the engine 45 starts becomes long. On the other hand, in the configuration of the present preferred embodiment in which the second detection body S is provided, the ignition control can be started by identifying the energization start detection body P6 before the crankshaft 48 rotates 360 degrees, so that the starting performance of the engine 45 can be improved.

As described above, according to the present preferred embodiment, the rotor 75 is provided with the plurality of first detection bodies P1 to P11 and the second detection body S. The plurality of first detection bodies P1 to P11 are disposed at even intervals along the rotation direction R1 of the rotor 75. The second detection body S is disposed at a position different from those of the first detection bodies P1 to P11 with respect to the direction along the rotation axis C of the rotor 75. That is, the second detection body S is provided on the rotor 75 at a position deviated along the rotation axis C of the rotor 75 from the first detection bodies P1 to P11. When the rotor 75 rotates, the plurality of first detection bodies P1 to P11 pass through the detection region SR1 of the crank angle sensor SE1 one after another, and crank pulses are accordingly generated. On the other hand, when the rotor 75 rotates, the second detection body S passes through the detection region SR2 of the reference angle sensor SE2 in a compression stroke of the engine 45, and accordingly, a reference angle pulse is generated. By using this reference angle pulse as a reference, the first detection bodies P1 to P11 are identified, and in response to detection of the energization start detection body P6, energization of the ignition coil 79 is started immediately. Therefore, energization of the ignition coil 79 can be started in the first compression stroke after cranking of the engine 45 is started, so that reliability of start of the engine in the first compression stroke can be improved. In addition, since the plurality of first detection bodies P1 to P11 can be identified by using an output signal of the reference angle sensor SE2, subsequent control of the engine 45 can also be started immediately. Further, the second detection body S is disposed so as to be deviated along the rotation axis C direction from the first detection bodies P1 to P11, and the reference angle sensor SE2 that detects the second detection body S is provided separately from the crank angle sensor SE1 that detects the first detection bodies P1 to P11. Therefore, regardless of whether the rotation of the rotor 75 is at a high speed or at a low speed, erroneous detection hardly occurs, so that reliability of engine starting and stable engine control in the first compression stroke can be secured. Accordingly, an engine system that improves starting performance by reliably igniting the engine in the first compression stroke can be provided.

In addition, the second detection body S is detected by the reference angle sensor SE2 just before the crank angle sensor SE1 detects the energization start detection body P6, so that the disposition of the reference angle sensor SE2 can be freely determined around the rotor 75. Therefore, the degree of freedom of disposition of the reference angle sensor SE2 is high, and a space having room around the rotor 75 can be selected for disposition of the reference angle sensor SE2.

In this preferred embodiment, the second detection body S is disposed at the same position as one first detection body with respect to the rotation direction R1 of the rotor 75. In detail, the second detection body S is integrated with one first detection body and defines one long protrusion extending in the direction along the rotation axis C. Accordingly, when the crank angle sensor SE1 detects the first detection body, even if it also responds to the second detection body S (that is, also detects the second detection body S simultaneously), this hardly greatly influences the output signal of the crank angle sensor SE1. In addition, the first detection bodies P1 to P11 and the second detection body S are allowed to be disposed close to each other, so that the size of the rotor 75 in the rotation axis C direction can be reduced. Accordingly, the engine system can be downsized. In particular, one first detection body and the second detection body S are integrated together, so that erroneous detections can be reduced and the engine 45 can be stably controlled, and the rotor 75 can be further downsized. In the manufacturing process, when the first detection bodies P1 to P11 are disposed, the second detection body S can be disposed simultaneously, so that the number of manufacturing steps can be reduced. In detail, when the tubular body is subjected to press working to form the detection bodies P1 to P11 in order, the second detection body S can be formed in the same step of forming the one first detection body.

In this preferred embodiment, the crank angle sensor SE1 and the reference angle sensor SE2 are disposed at different positions with respect to the direction along the rotation axis C. Accordingly, the detection regions SR1 and SR2 of these sensors SE1 and SE2 can be easily deviated from each other in the rotation axis C direction, so that erroneous detections can be reduced and the sensors SE1 and SE2 can be easily disposed.

In this preferred embodiment, the detection regions SR1 and SR2 of the sensors SE1 and SE2 are disposed at different positions with respect to the circumferential direction of the rotor 75. With this configuration, the sensors SE1 and SE2 can be easily disposed at positions different in the circumferential direction, so that, for example, a design for downsizing the engine system can be easily made.

In a preferred embodiment of the present invention, the first detection bodies P1 to P11 and the second detection body S are distributed to both sides of the centerline 76 in the width direction of the tubular portion of the rotor 75. Accordingly, the first detection bodies P1 to P11 and the second detection body S can be disposed by effectively utilizing the width of the tubular portion of the rotor 75, so that the width of the tubular portion can be reduced. Accordingly, the rotor 75 can be downsized, and as a result, the engine system can be downsized.

In this preferred embodiment, dispositions of the second detection body S and the detection region SR2 are set so that the second detection body S is detected by the reference angle sensor SE2 just before the top dead point position. Accordingly, when starting the engine, a reference relating to the rotation position of the crankshaft 48 can be obtained just before reaching the top dead point position, and according to this, it becomes possible to identify the first detection bodies. As a result, energization control of the ignition coil 79 can be quickly performed, so that the engine 45 can be quickly started.

Further, in the present preferred embodiment, a reference position is set based on either one detected earlier of the second detection body S and the tooth-missing position N, and based on the reference position thus set, the energization start detection body P6 and the ignition detection body P7 are identified. Therefore, after the starter motor 43 is started, the energization start detection body P6 can be quickly identified, that is, identified before the crankshaft 48 has rotated 360 degrees. Therefore, after the starter motor 43 is started, ignition control can be quickly started, and the engine 45 can be quickly started. In particular, in this preferred embodiment, since the second detection body S is detected by the reference angle sensor SE2 just before the energization start detection body P6 is detected by the crank angle sensor SE1, the energization start detection body P6 can be quickly and reliably identified after starting the starter motor 43. Accordingly, the engine 45 can be quickly started.

In the present preferred embodiment, after starting of the engine 45 is completed, by using not the second detection body S but the tooth-missing position N as a reference, the energization start detection body P6 and the ignition detection body P7 are identified. That is, in the present preferred embodiment, when starting the engine, quick start of ignition control is given priority and the second detection body S is used; however, when starting of the engine is completed, the first detection bodies P1 to P11 are identified by using not the second detection body S but the tooth-missing position N as a reference. The tooth-missing position N is disposed near the bottom dead point position and is detected in an expansion stroke or intake stroke of the engine 45, so that at the time of this detection, the rotation of the crankshaft 48 is stable. Accordingly, after starting of the engine is completed, the accuracy of identification of the first detection bodies P1 to P11 can be further increased and accurate and efficient engine control can be realized.

However, the tooth-missing position N does not necessarily have to be provided, and even after starting of the engine 45 is completed, the energization start detection body P6 and the ignition detection body P7 may be identified by using the second detection body S as a reference. In detail, in the flowchart shown in Fig. 9, Step S1 may be omitted. Even in this case, ignition control when starting the engine can be quickly started, and subsequent engine control can also be performed without problems.

A preferred embodiment of the present invention is described above; however, the present invention can also be carried out in other modes. For example, the above-described preferred embodiment shows an example in which the first detection bodies P1 to P11 and the second detection body S are formed of projections provided on the outer peripheral surface 75a of the rotor 75. However, these detection bodies may be recess portions formed on the outer peripheral surface 75a, or magnetic bodies embedded in the outer peripheral surface 75a. Similarly, in the above-described preferred embodiment, the reference position detection portion is defined by the tooth-missing position N; however, it is also possible that the reference position detection portion may be formed of a projection, a recess portion, or a magnetic body. Further, the above-described embodiment shows an example in which the rear ends of the first detection bodies P1 to P11 are disposed at even intervals; however, it is also possible that the front ends of the first detection bodies P1 to P11 are disposed at even intervals, and the front ends of the detection bodies P1 to P11 and S are used as detection edges. However, the output signal of the crank angle sensor SE1 is more stable in the case where the rear end positioned on the upstream side in the rotation direction R1 is used as a detection edge, and accordingly, stable detection is realized.

In the above-described preferred embodiment, when starting the engine, the first detection body that is detected just after the second detection body S is detected is identified as the energization start detection body P6, and in response to (in synchronization with) this identification, energization of the ignition coil 79 is started. However, it is also possible that the second detection body S and the reference angle sensor SE2 are disposed so that the second detection body S and the energization start detection body P6 are detected simultaneously, and when starting the engine, energization of the ignition coil 79 is started in response to (in synchronization with) the detection of the second detection body S. In this case, a reference position is provided by the second detection body S, and the first detection bodies are identified from the ignition detection body P7. Therefore, energization of the ignition coil 79 is started in response to (in synchronization with) detection of the second detection body S, energization of the ignition coil 79 is shut off in response to (in synchronization with) the ignition detection body P7 that is detected next, and then, the ignition plug 80 spark-discharges.

In the above-described preferred embodiment, one of the first detection bodies P1 to P11 and the second detection body S are integrated together; however, it is also possible that the second detection body S is a protrusion or the like separated from the first detection bodies P1 to P11. Further, the first detection bodies P1 to P11 and the second detection body S do not necessarily have to have the same length with respect to the circumferential direction of the rotor 75. Further, the second detection body S may be at a position different from that of any of the first detection bodies P1 to P11 in the circumferential direction of the rotor 75.

Further, in the above-described preferred embodiments, a configuration in which the power transmission path between the engine 45 and the drive wheel (rear wheel 4) is connected/disconnected by the centrifugal clutch 47 is shown; however, the clutch that connects/disconnects the power transmission path may be realized by other modes such as a hydraulic clutch or an electromagnetic clutch. By controlling the hydraulic clutch or the electromagnetic clutch, etc., according to an engine rotation speed, etc., the same operation as in the case where the centrifugal clutch 47 is used can be realized.

In the above-described preferred embodiment, the configuration in which the throttle valve 92 is mechanically interlocked with the accelerator grip 32 by the wire 99 is described; however, instead of this configuration, a so-called electronic throttle device may be applied. Specifically, while the throttle valve 92 is driven by a throttle actuator such as an electric motor, an accelerator opening degree sensor that detects the operation amount of the accelerator grip 32 (accelerator opening degree) may be provided. In this case, an output signal of the accelerator opening degree sensor is input into the ECU 100. The ECU 100 drives the throttle actuator and adjusts the throttle opening degree according to the output signal of the accelerator opening degree sensor.

In the above-described preferred embodiment, a scooter type motorcycle 1 is described by way of example; however, the present invention is also applicable to other motorcycles such as a moped type, a sport type, etc. Further, not only to motorcycles, the present invention is also applicable to other saddle type vehicles such as all-terrain vehicles and snowmobiles. Further, the present invention is also applicable not only to engines for saddle type vehicles but also to engines for other types of vehicles and engines to be used for a purpose other than vehicles, such as power generators.

Preferred embodiments of the present invention are described in detail above, and these are merely detailed examples used for clarifying the technical contents of the present invention, and the present invention should not be interpreted as limited to these detailed examples, and the scope of the present invention is limited only by the following claims.

The present application corresponds to Japanese Patent Application No. 2013-94113 filed in the Japan Patent Office on April 26, 2013, and the entire disclosure of the application is incorporated herein by reference.

### [Reference Signs List]

- 1: Motorcycle
- 8: Power unit
- 25: Battery
- 43: Starter motor
- 44: Power generator
- 45: Engine
- 48: Crankshaft
- 56: Combustion chamber
- 75: Rotor
- 79: Ignition coil
- 80: Ignition plug
- 87: Injector
- 100: ECU
- 101: Drive control section
- 103: Ignition coil driving circuit
- 104: Injector driving circuit
- 106: One-side edge detection circuit
- 107: One-side edge detection circuit
- 111: Start control section
- 112: Engine output control section
- 113: Detection body identifying section
- 115: Fuel supply control section
- 116: Ignition control section
- C: Rotation axis
- N: Tooth-missing position
- P1 - P11: First detection body
- P6: Energization start detection body
- P7: Ignition detection body
- S: Second detection body
- R1: Rotation direction

## Claims

1. An engine system comprising:
an engine having an ignition plug that spark-discharges inside a combustion chamber, an ignition coil that stores energy to be supplied to the ignition plug, and a crankshaft;
a rotary member that rotates around a rotation axis together with the crankshaft;
a plurality of first detection bodies provided on the rotary member and disposed at even intervals along a rotation direction of the rotary member;
a second detection body provided on the rotary member and disposed at a position different from those of the first detection bodies in a direction along the rotation axis;
a first detecting means that has a first detection region at a fixed position on a path that the first detection bodies pass through according to rotation of the rotary member, and outputs a detection signal that varies according to passage of the first detection body through the first detection region;
a second detecting means that has a second detection region at a fixed position on a path that the second detection body passes through according to rotation of the rotary member, outputs a detection signal that varies according to passage of the second detection body through the second detection region, and detects the second detection body in a compression stroke of the engine; and
an ignition control means that starts energization control for energizing the ignition coil in response to detection of the second detection body by the second detecting means.

2. The engine system according to Claim 1, wherein
the plurality of first detection bodies include an ignition detection body that provides an ignition timing of the ignition plug, and
the ignition control means stops energization of the ignition coil in response to detection of the ignition detection body by the first detecting means, and makes the ignition plug spark-discharges.

3. The engine system according to Claim 1 or 2, wherein the second detection body is disposed at the same position as any of the plurality of first detection bodies with respect to a circumferential direction of the rotary member.

4. The engine system according to Claim 3, wherein the second detection body is integrated with any of the plurality of first detection bodies.

5. The engine system according to any one of Claims 1 to 4, wherein the first detecting means and the second detecting means are disposed at different positions with respect to the direction along the rotation axis.

6. The engine system according to any one of Claims 1 to 5, wherein the first detection region and the second detection region are disposed at different positions with respect to a circumferential direction of the rotary member.

7. The engine system according to any one of Claims 1 to 6, wherein
the rotary member includes a tubular portion that has a width in the direction along the rotation axis, and
the first detection bodies are disposed so as to be deviated in one direction along the rotation axis with respect to a center position in a width direction of the tubular portion.

8. The engine system according to Claim 7, wherein the second detection body is disposed so as to be deviated in the other direction along the rotation axis with respect to the center position in the width direction of the tubular portion.

9. The engine system according to any one of Claims 1 to 8, wherein the second detection region is disposed so that the second detection body passes through the second detection region when a rotation position of the crankshaft is in a predetermined range just before a top dead point position.

10. The engine system according to any one of Claims 1 to 9, further comprising:
a reference position detection portion that is provided on the rotary member so as to pass through the first detection region, and that can be distinguished from the first detection bodies and the second detection body based on an output signal of the first detecting means; and
a detection body identifying means that identifies the first detection bodies by using the reference position detection portion or the second detection body as a reference based on output signals of the first detecting means and the second detecting means, wherein
the plurality of first detection bodies include an energization start detection body that provides an energization start timing for the ignition coil,
the detection body identifying means identifies the energization start detection body by using either one detected earlier of the second detection body and the reference position detection portion as a reference before starting of the engine is completed after starting of the engine is initiated, and on the other hand, after starting of the engine is completed, the detection body identifying means identifies the energization start detection body by using the reference position detection portion as a reference without using an output of the second detecting means, and
the ignition control means starts energization of the ignition coil in response to identification of the energization start detection body by the detection body identifying means.

11. The engine system according to Claim 10, wherein a positional relationship between the second detection body and the second detection region is determined so that the first detection body that is detected first after the second detection body is detected by the second detecting means is the energization start detection body.

12. The engine system according to Claim 10 or 11, wherein the reference position detection portion is disposed on the rotary member so as to pass through the first detection region when a rotation position of the crankshaft is in a predetermined range including a top dead point position.

13. A vehicle comprising the engine system according to any one of Claims 1 to 12, and using the engine as a power source.
